# EUROPÄISCHE PATENTSCHRIFT

(11) **EP 1 072 543 B1**
(45) Veröffentlichungstag und Bekanntmachung des Hinweises auf die Patenterteilung: **07.12.2005**
(21) Anmeldenummer: 00111602.9
(22) Anmeldetag: 31.05.2000
(51) Int. Cl.: B65G 69/04, B65D 88/68

(54) **Silo**
Silo
Silo

(30) Priorität: 27.07.1999 DE 19934452
(43) Veröffentlichungstag der Anmeldung: 31.01.2001
(73) Patentinhaber: PUTZMEISTER Aktiengesellschaft, 72631 Aichtal (DE)
(72) Erfinder: Gourieux, Bernard, 94120 Fontenay sous Bois (FR)
(74) Vertreter: Wolf, Eckhard

(56) Entgegenhaltungen:
- EP-A- 0 849 469
- DE-A- 4 018 789
- FR-A- 1 367 134
- FR-A- 2 009 441
- GB-A- 571 502
- US-A- 3 923 204
- US-A- 5 149 192
- US-A- 5 348 195

## Beschreibung

Die Erfindung betrifft einen Silo gemäß dem Oberbegriff des Anspruchs 1 (vgl. FR-A-1 367 134).

Bekannte Silos dieser Art sind zur Aufnahme von Schüttgütern und von entwässerten und hochviskosen Schlämmen bestimmt. Das Austragorgan sorgt dafür, daß das im Silo befindliche Material in Bodennähe zur Austragöffnung verschoben und von dort aus weitergefördert wird. Es kann beispielsweise als hydraulisch angetriebener Gleitrahmen oder als motorisch angetriebener rotierender Ausräumarm ausgebildet werden. Die hydraulischen oder motorischen Antriebsmechanismen für das Austragorgan sind jeweils in Bodennähe entweder in der Silowand oder auf der Unterseite des Bodens angeordnet. Das Austragorgan übernimmt bei den bekannten Silos zusätzlich die Aufgabe, das im Silo befindliche Gut bis zur Oberfläche hin über die gesamte Breite des Silos zu verteilen. Dies funktioniert zwar recht gut bei schütt- und fließfähigen Gütern. Bei hochviskosen Massen, die in Strangform über die Beladungsöffnung in den Silo eingebracht werden, hat es sich jedoch gezeigt, daß die Verteilerfunktion des Austragorgans nicht ausreicht, um eine lokale Säulenbildung unterhalb der Beladungsöffnung zu verhindem. Dies gilt um so mehr, je größer die Standfestigkeit des Materials und je steiler daher dessen Böschungswinkel ist. In diesem Fall wird der Siloraum über seine Höhe nur unvollständig genutzt.

Ausgehend hiervon liegt der Erfindung die Aufgabe zugrunde, einen Silo der eingangs angegebenen Art zu entwickeln, bei dem eine bessere Gutverteilung innerhalb des Silos und dadurch eine bessere Raumnutzung möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß eine bessere Befüllung des Silos dadurch ermöglicht wird, daß in Deckelnähe unter der Beladeöffnung ein motorisch bewegbares Verteilerorgan angeordnet ist.

Gemäß einer bevorzugten Ausgestaltung der Erfindung ist eine sich achszentral zwischen dem Deckel und dem Boden erstreckende, über einen Getriebemotor drehend antreibbare Antriebswelle vorgesehen, an der in Bodennähe mindestens ein das Austragorgan bildender Ausräumarm und in Deckelnähe mindestens ein das Verteilerorgan bildender Verteilerarm im wesentlichen radial überstehend angeordnet sind. Der Getriebemotor ist dabei zweckmäßig auf dem Deckel mit achszentral ausgerichteter Abtriebswelle angeordnet. Um die beim Antrieb auftretenden Drehmomente auf das Silogehäuse übertragen zu können, ist der Getriebemotor am Deckel angeflanscht. Weiter ist die Antriebswelle vorteilhafterweise in einem unterhalb des Bodens angeordneten, achszentralen Drehlager gelagert.

Um die Ausräum- und Verteilerarme sicher an der Antriebswelle befestigen zu können, weist diese zweckmäßig einen quadratischen oder rechteckigen Querschnitt auf. Vorteilhafterweise ist an der Antriebswelle auf der Höhe des Ausräumarms und/oder des Verteilerarms ein mit einem radial nach außen weisenden Flansch versehenes Flanschelement fixiert, vorzugsweise angeschraubt oder angeschweißt, an welchem der Ausräumarm bzw. der Verteilerarm mit einem passenden Gegenflansch angeflanscht ist. Zweckmäßig weisen der Ausräumarm und der Verteilerarm nach radial entgegengesetzten Seiten der Antriebswelle. Grundsätzlich ist es auch möglich, daß mindestens zwei im Winkelabstand voneinander angeordnete Verteilerarme vorgesehen sind.

Gemäß einer bevorzugten Ausgestaltung der Erfindung sind die Beladungsöffnung und die Austragöffnung exzentrisch zur Antriebswelle angeordnet. Der Ausräumarm hat dabei zweckmäßig eine schräg in Richtung Austragöffnung weisende Mitnehmerfläche, mit der das auszuräumende Gut von dem rotierenden Ausräumarm in Richtung Austragöffnung gedrückt werden kann.

Unterhalb der Austragöffnung kann eine Fördereinrichtung angeordnet werden, die beispielsweise als Schneckenförderer, insbesondere als Doppelschneckenverpreßeinrichtung ausgebildet sein kann. Die Fördereinrichtung kann in eine Dickstoffpumpe münden, die beispielsweise als ZweizylinderKolbenpumpe ausgebildet ist.

Mit Hilfe des motorisch bewegbaren Verteilerorgans kann das über die Beladungsöffnung zugeführte Gut über den gesamten Querschnitt des Silos verteilt zugeführt werden. Dies ist vor allem bei hochviskosen Schlämmen oder klebrigen pastösen Massen von Bedeutung, die eine geringe Fließfähigkeit und somit eine hohe Standfestigkeit aufweisen und sich daher nicht selbsttätig unter der Einwirkung der Gewichtskraft über den Silo verteilen können. Durch den Verteilerarm wird das strangförmig ankommende Material unterhalb der Beladungsöffnung erfaßt und über die gesamte Silobreite verteilt. Ein Füllstandssensor sorgt dafür, daß die Materialzufuhr bei vollem Silo unterbrochen wird. Zu diesem Zweck kann im Deckel im Abstand von der Beladungsöffnung ein Durchbruch mit einem Rohransatz zur Aufnahme eines vorzugsweise als Ultraschallsonde ausgebildeten Füllstandssensor angeordnet werden.

Der erfindungsgemäße Silo kann vorteilhafterweise zur Aufnahme von hochviskosen, vorzugsweise klebrigen Massen verwendet werden.

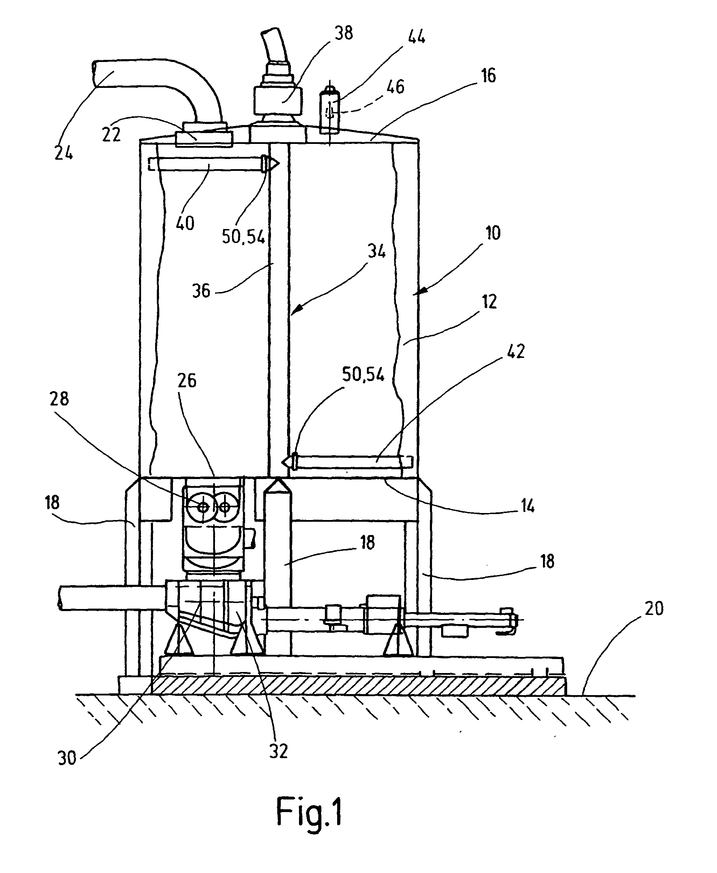

Im folgenden wird die Erfindung anhand eines in der Zeichnung in schematischer Weise dargestellten Ausführungsbeispiels näher erläutert. Es zeigen
- Fig. 1: eine Seitenansicht eines Silos;
- Fig. 2: einen vergrößerten Ausschnitt aus Fig. 1;
- Fig. 3: einen vergrößerten Ausschnitt aus Fig. 2;
- Fig. 4: eine Stirnseitenansicht eines Ausräumarms.

Der in der Zeichnung dargestellte Vorratssilo ist vor allem zur Aufnahme von hochviskosen, zähen und gegebenenfalls klebrigen Massen bestimmt. Der Silo 10 weist eine im wesentlichen zylindrische Silowand 12 auf, die nach unten durch einen Boden 14 und nach oben durch einen Deckel 16 begrenzt ist. Der Silo 10 ist bodenseitig über vier Stützen 18 auf dem Fußboden 20 abgestützt und dort verankert. Im Silodeckel 16 befindet sich eine Beladungsöffnung 22, die über das Rohr 24 mit dem zu speichernden Gut beschickbar ist. Der Siloboden 14 weist eine Austragöffnung 26 auf, die in einen unter dem Siloboden 14 befindlichen als Doppelschneckenverpreßförderer ausgebildeten Förderer 28 mündet, der seinerseits zum Materialauftragsbehälter 30 einer Zweizylinder-Dickstoffpumpe 32 führt.

Der Silo umfaßt ein kombiniertes Verteiler- und Austragsystem 34, das eine sich achszentral durch den Silo erstreckende Antriebswelle 36 aufweist, die über einen auf dem Silodeckel 16 angeflanschten Getriebemotor 38 drehend antreibbar ist, und die einen deckelnah angeordneten, radial überstehenden Verteilerarm 40 und einen bodennah angeordneten, radial überstehenden Ausräumarm 42 trägt. Der Verteilerarm 40 überstreicht beim Drehen der Antriebswelle 36 die Ladungsöffnung 22 und nimmt den von dort aus nach unten fallenden Materialstrang mit. Sobald das Material in Deckelnähe reicht, wird die Oberfläche über den Verteilerarm 40 über den gesamten Siloquerschnitt verteilt und glattgestrichen. Ein in einem Rohransatz 44 des Deckels 16 befindlicher, vorzugsweise als Ultraschallsonde ausgebildeter Füllstandssensor 46 überwacht den Füllvorgang. Über den Ausräumarm wird das im Silo befindliche Material mitgenommen und im Bereich der Austragöffnung 26 zum Förderer 28 ausgetragen.

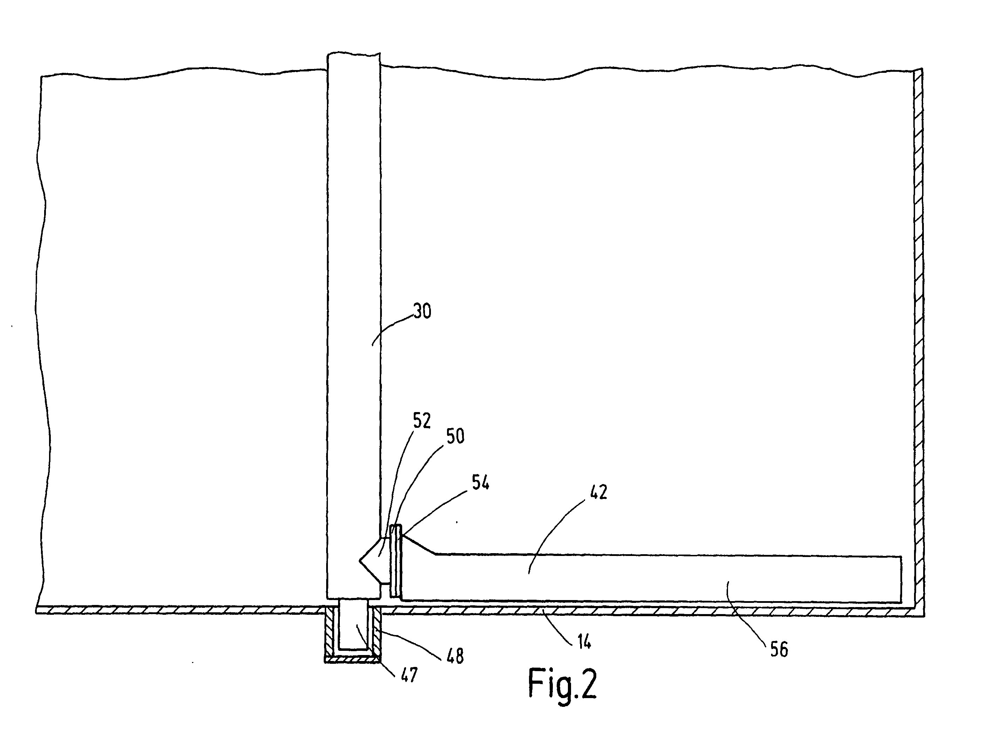

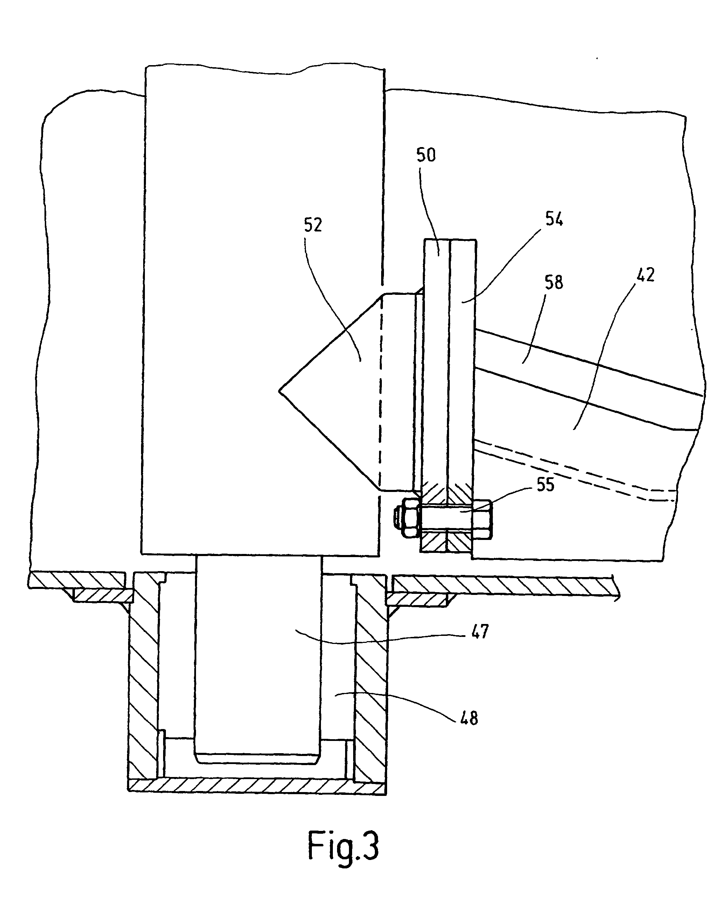

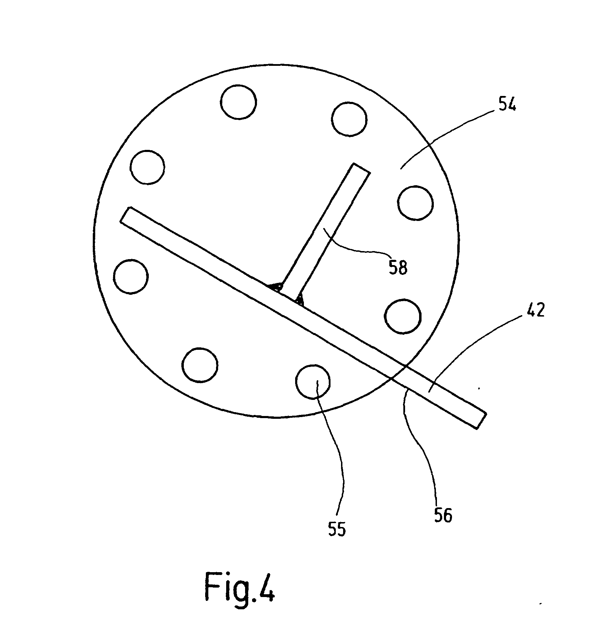

Wie aus den Fig. 2 und 3 zu ersehen ist, ist die Antriebswelle 36 mit einem Lagerzapfen 47 in einem bodenseitig angeordneten Gleitlager 48 gelagert. Die Antriebswelle 36 weist einen quadratischen Querschnitt auf und trägt auf der Höhe des Verteilerarms 40 und des Ausräumarms 42 je ein Flanschelement 50. Das Flanschelement 50 ist mit einem Montageansatz 52 an der Antriebswelle 36 angeschweißt, während der Verteilerarm 40 bzw. der Ausräumarm 42 über einen Radialflansch 54 am Flanschelement 50 angeschraubt ist. Wie aus Fig. 4 zu ersehen ist, weist der Radialflansch 54 zu diesem Zweck acht Schraubbohrungen 55 auf. Der eigentliche Ausräumarm 42 ist mit einer schräg zum Siloboden 14 weisenden Mitnehmerfläche 56 am Flansch 54 angeschweißt und über eine gleichfalls angeschweißte Querrippe 58 ausgesteift.

## Patentansprüche

1. Silo mit einem eine Beladungsöffnung (22) aufweisenden Deckel (16), mit einem mindestens eine Austragöffnung (26) aufweisenden Boden (14), mit einer nach oben durch den Deckel (16) und nach unten durch den Boden (14) begrenzten, vorzugsweise zylindrischen Silowand (12), mit einem in Bodennähe über der Austragöffnung (26) angeordneten, motorisch bewegten Austragorgan (42), mit einem in Deckelnähe unter der Beladungsöffnung (22) angeordneten motorisch bewegten Verteilerorgan (40), und mit einer sich achszentral zwischen dem Deckel (16) und dem Boden (14) erstreckenden, über einen Getriebemotor (38) antreibbaren Antriebswelle (36), an der in Bodennähe mindestens ein das Austragorgan bildender Ausräumarm (42) und in Deckelnähe unter der Beladungsöffnung mindestens ein das Verteilerorgan bildender Verteilerarm (40) angeordnet sind, wobei an der Antriebswelle (36) auf der Höhe des Austragsorgans (42) und/oder des Verteilerorgans (40) ein mit einer radial nach außen weisenden Befestigungsfläche versehenes Befestigungselement (50) angeordnet ist, an welchem das Austragorgan (42) bzw. das Verteilerorgan (40) mit einer passenden Gegenfläche (54) befestigt ist, **dadurch gekennzeichnet, dass** das Befestigungselement als ein die Befestigungsfläche bildenden Flansch tragendes Flanschelement (50) ausgebildet ist, und dass der Ausräumarm (42) und der Verteilerarm (40) bezüglich der Drehachse der Antriebswelle (36) radial über einen die Gegenfläche bildenden Gegenflansch (54) überstehen und der Ausräumarm (42) eine schräg zum Siloboden (14) weisende Mitnehmerfläche (56) aufweist.

2. Silo nach Anspruch 1, **dadurch gekennzeichnet, daß** der Getriebemotor (38) auf dem Deckel (16) mit achszentral ausgerichteter Abtriebswelle angeordnet, vorzugsweise angeflanscht ist.

3. Silo nach Anspruch 1 oder 2, **dadurch gekennzeichnet, daß** die Antriebswelle (36) in einem unterhalb des Bodens (14) angeordneten, achszentralen Drehlager (48) gelagert ist.

4. Silo nach einem der Ansprüche 1 bis 3, **dadurch gekennzeichnet, daß** die Beladungsöffnung (22) und die Austragöffnung (26) exzentrisch zur Antriebswelle (36) angeordnet sind.

5. Silo nach einem der Ansprüche 1 bis 4, **dadurch gekennzeichnet, daß** die Antriebswelle (36) einen quadratischen oder rechteckigen Querschnitt aufweist.

6. Silo nach einem der Ansprüche 1 bis 5, **dadurch gekennzeichnet, daß** das Austragorgan (42) und das Verteilerorgan (40) nach radial entgegengesetzten Seiten der Antriebswelle (36) weisen.

7. Silo nach einem der Ansprüche 1 bis 6, **dadurch gekennzeichnet, daß** die Mitnehmerfläche (56) schräg in Richtung Austragöffnung (26) weist.

8. Silo nach einem der Ansprüche 1 bis 7, **dadurch gekennzeichnet, daß** mindestens zwei im Winkelabstand voneinander angeordnete Verteilerarme (40) vorgesehen sind.

9. Silo nach einem der Ansprüche 1 bis 8, **dadurch gekennzeichnet, daß** unterhalb der Austragöffnung eine Fördereinrichtung (28) angeordnet ist.

10. Silo nach Anspruch 9, **dadurch gekennzeichnet, daß** die Fördereinrichtung (28) als Doppelschneckenverpreßeinrichtung ausgebildet ist.

11. Silo nach Anspruch 9 oder 10, **dadurch gekennzeichnet, daß** die Fördereinrichtung (28) in eine Dickstoffpumpe (32) mündet.

12. Silo nach Anspruch 11, **dadurch gekennzeichnet, daß** die Dickstoffpumpe (32) als Zweizylinderkolbenpumpe ausgebildet ist.

13. Silo nach einem der Ansprüche 1 bis 12, **dadurch gekennzeichnet, daß** im Deckel im Abstand von der Beladungsöffnung (22) ein Durchbruch mit einem Rohransatz (44) zur Aufnahme eines vorzugsweise als Ultraschallsonde ausgebildeten Füllstandssensors (46) angeordnet ist.

## Claims

1. Silo with a cover (16) having a charging opening (22), with a base (14) having at least one discharge opening (26), with a preferably cylindrical silo wall (12) delimited upwards by the cover (16) and downwards by the base (14), with a discharge organ (42) moved by motor arranged close to the base over the discharge opening (26), with a distributor organ (40) moved by motor arranged close to the cover under the charging opening (22), and with a drive shaft (36) drivable via a geared motor (38) and extending axially centrally between the cover (16) and the base (14), arranged on which shaft are at least one clearing arm (42) forming the discharge organ close to the base and at least one distributor arm (40) forming the distributor organ close to the cover under the charging opening, an attachment element (50) provided with an attachment surface pointing radially outwards being arranged on the drive shaft (36) at the level of the discharge organ (42) and/or of the distributor organ (40), to which element the discharge organ (42) or the distributor organ (40) is attached using a matching counter-surface (54), **characterized in that** the attachment element is formed as a flange element (50) supporting the flange forming the attachment surface, and that the clearing arm (42) and the distributor arm (40) protrude with reference to the axis of rotation of the drive shaft (36) radially beyond a counter-flange (54) forming the counter-surface and the clearing arm (42) has a carrier surface (56) pointing obliquely relative to the silo base (14).

2. Silo according to claim 1, **characterized in that** the geared motor (38) is arranged, preferably flanged, onto the cover (16) with an output shaft aligned axially centrally.

3. Silo according to claim 1 or 2, **characterized in that** the drive shaft (36) is supported in an axially central pivot bearing (48) arranged underneath the base (14).

4. Silo according to one of claims 1 to 3, **characterized in that** the charging opening (22) and the discharge opening (26) are arranged eccentrically to the drive shaft (36).

5. Silo according to one of claims 1 to 4, **characterized in that** the drive shaft (36) has a square or rectangular cross-section.

6. Silo according to one of claims 1 to 5, **characterized in that** the discharge organ (42) and the distributor organ (40) point to radially opposed sides of the drive shaft (36).

7. Silo according to one of claims 1 to 6, **characterized in that** the carrier surface (56) points obliquely in the direction of the discharge opening (26).

8. Silo according to one of claims 1 to 7, **characterized in that** at least two distributor arms (40) arranged at an angular distance from one another are provided.

9. Silo according to one of claims 1 to 8, **characterized in that** a conveying device (28) is arranged underneath the discharge opening.

10. Silo according to claim 9, **characterized in that** the conveying device (28) is formed as a double-screw extrusion device.

11. Silo according to claim 9 or 10, **characterized in that** the conveying device (28) opens into a thick matter pump (32).

12. Silo according to claim 11, **characterized in that** the thick matter pump (32) is formed as a two-cylinder reciprocating pump.

13. Silo according to one of claims 1 to 12, **characterized in that** arranged in the cover at a distance from the charging opening (22) is an opening with a pipe socket (44) to take up a filling level sensor (46) preferably formed as an ultrasonic probe.

## Revendications

1. Silo avec un couvercle (16) présentant une ouverture de chargement (22), avec un fond (14) présentant au moins une ouverture d'évacuation (26), avec une paroi de silo (12) de préférence cylindrique, délimitée vers le haut par le couvercle (16) et vers le bas par le fond (14), avec un organe d'évacuation (42) déplacé par moteur et disposé à proximité du fond au-dessus de l'ouverture d'évacuation (26), avec un organe répartiteur (40) déplacé par moteur et disposé à proximité du couvercle en dessous de l'ouverture de chargement (22), et avec un arbre d'entraînement (36) s'étendant centré sur l'axe entre le couvercle (16) et le fond (14) et pouvant être entraîné au moyen d'un moto-réducteur (38), arbre sur lequel sont disposés à proximité du fond au moins un bras de déblaiement (42) constituant l'organe d'évacuation et à proximité du couvercle, en dessous de l'ouverture de chargement, au moins un bras répartiteur (40) constituant l'organe répartiteur, sachant qu'un élément de fixation (50) pourvu d'une surface de fixation dirigée radialement vers l'extérieur est disposé sur l'arbre d'entraînement (36) à hauteur de l'organe d'évacuation (42) et/ou de l'organe répartiteur (40), élément sur lequel l'organe d'évacuation (42) ou respectivement l'organe répartiteur (40) est fixé par une contre-surface adaptée (54), **caractérisé en ce que** l'élément de fixation est réalisé sous la forme d'un élément de bridage (50) portant une bride constituant la surface de fixation, et **en ce que** le bras de déblaiement (42) et le bras répartiteur (40) dépassent radialement, par rapport à l'axe de rotation de l'arbre d'entraînement (36), d'une contre-bride (54) formant la contre-surface, et le bras de déblaiement (42) présente une surface entraîneuse (56) dirigée en oblique vers le fond (14) du silo.

2. Silo selon la revendication 1, **caractérisé en ce que** le moto-réducteur (38) est disposé sur le couvercle (16), de préférence bridé, avec son arbre de sortie centré sur l'axe.

3. Silo selon la revendication 1 ou 2, **caractérisé en ce que** l'arbre d'entraînement (36) est monté dans un palier de rotation (48) centré sur l'axe, disposé en dessous du fond (14).

4. Silo selon l'une des revendications 1 à 3, **caractérisé en ce que** l'ouverture de chargement (22) et l'ouverture d'évacuation (26) sont disposées en positions excentriques par rapport à l'arbre d'entraînement (36).

5. Silo selon l'une des revendications 1 à 4, **caractérisé en ce que** l'arbre d'entraînement (36) présente une section carrée ou rectangulaire.

6. Silo selon l'une des revendications 1 à 5, **caractérisé en ce que** l'organe d'évacuation (42) et l'organe répartiteur (40) sont dirigés vers des côtés radialement opposés de l'arbre d'entraînement (36).

7. Silo selon l'une des revendications 1 à 6, **caractérisé en ce que** la surface entraîneuse (56) est dirigée en oblique vers l'ouverture d'évacuation (26).

8. Silo selon l'une des revendications 1 à 7, **caractérisé en ce qu'**il est prévu au moins deux bras répartiteurs (40) disposés à distance angulaire entre eux.

9. Silo selon l'une des revendications 1 à 8, **caractérisé en ce qu'**un convoyeur (28) est disposé en dessous de l'ouverture d'évacuation.

10. Silo selon la revendication 9, **caractérisé en ce que** le convoyeur (28) est réalisé sous forme de dispositif de compression à vis double.

11. Silo selon la revendication 9 ou 10, **caractérisé en ce que** le convoyeur (28) débouche dans une pompe (32) à matières épaisses.

12. Silo selon la revendication 11, **caractérisé en ce que** la pompe (32) à matières épaisses est réalisée sous forme de pompe alternative à deux cylindres.

13. Silo selon l'une des revendications 1 à 12, **caractérisé en ce qu'**est disposée dans le couvercle, à distance de l'ouverture de chargement (22), une brèche pourvue d'un embout tubulaire (44) pour recevoir un capteur (46) de niveau de remplissage réalisé de préférence sous forme de sonde à ultrasons.
